# DEMANDE DE BREVET EUROPEEN

(11) **EP 1 435 197 A1**
(43) Date de publication de la demande: **07.07.2004**
(21) Numéro de dépôt: 03364043.4
(22) Date de dépôt: 23.12.2003
(51) Int. Cl.: A01K 45/00, A01K 31/00, A01K 1/02

(54) **Conteneur pour le transport de menu bétail et quai de déchargement de menu bétail contenu dans un tel conteneur**

(30) Priorité: 30.12.2002 FR 0216884
(71) Demandeur: Electro Mecanique du Pelem, 22480 Saint-Nicolas du Pelem (FR)
(72) Inventeur: Gravot, Jean-Luc, 56260 Lamor Plage (FR); Perrot, Bernard, 22100 Plounevez Quintin (FR)
(74) Mandataire: Larcher, Dominique

(57) **Abrégé**

L'invention concerne le domaine du transport de menu bétail tel que des volailles. Plus précisément, l'invention concerne les conteneurs servant au transport de menu bétail ainsi que les quais de déchargement du menu bétail contenu dans ces conteneurs vers une chaîne d'abattage.

Un conteneur pour le transport de menu bétail, notamment de volailles, comprenant au moins quatre montants verticaux (1) et une pluralité de plateaux horizontaux (2) formant une structure étagée limitant une pluralité de compartiments répartis en au moins une colonne, comprend selon l'invention au moins une porte latérale (3) montée coulissante verticalement et fermant lesdits compartiments

## Description

L'invention concerne le domaine du transport de menu bétail tel que des volailles. Plus précisément, l'invention concerne les conteneurs servant au transport de menu bétail ainsi que les quais de déchargement du menu bétail contenu dans ces conteneurs vers une chaîne d'abattage.

Dans ce domaine, le menu bétail est traditionnellement transporté vivant, de la ferme d'élevage à l'abattoir, dans des bacs placés dans des conteneurs.

Classiquement, ces conteneurs comprennent une armature définissant une pluralité d'emplacements ou de cases, ces emplacements étant répartis en rangées, et en colonnes lorsque plusieurs rangées sont superposées.

Chaque emplacement peut recevoir un bac, par exemple par coulissement ou glissement dans la mesure ou chaque emplacement comporte des guides ou des rails adéquats.

Les systèmes de déchargement adaptés à ce type de conteneur comprennent généralement :
- un convoyeur de bacs destinés à recevoir les bacs après que ceux-ci sont extraits du conteneur, ce premier convoyeur transportant ensuite ces bacs jusqu'à une zone de travail où les petits animaux sont retirés des bacs pour être introduits dans une chaîne de traitement ;
- un convoyeur de conteneurs destiné à amener successivement les conteneurs près du convoyeur de bacs ;
- des moyens permettant de faire glisser un ou plusieurs bacs d'un conteneur sur le convoyeur de bacs.

De plus, de façon adaptée aux conteneurs comprenant plusieurs rangées superposées d'emplacements, le système comprend également une table élévatrice sur laquelle peut reposer un conteneur, cette table élévatrice permettant de mettre successivement au niveau du convoyeur de bacs les différents niveaux d'emplacement correspondant aux différents niveaux de superposition des rangées.

Dans de telles installations, il est nécessaire de procéder au nettoyage de bacs, le plus souvent en plastique, avant une nouvelle utilisation, ainsi que des conteneurs.

Il est donc prévu des moyens de convoyage distincts, d'une part pour les bacs, d'autre part pour les conteneurs, vers les stations de lavage.

Ces opérations de lavage entraînent un surcoût dans l'exploitation de l'installation d'abattage du menu bétail, d'autant plus important que deux chaînes de lavage distinctes sont nécessaires (une chaîne de lavage pour les bacs, une chaîne de lavage pour les conteneurs).

En outre, les stations de lavage correspondantes mobilisent un espace au sol relativement important et nécessitent des équipements, notamment de convoyage, volumineux.

L'invention a pour objectif de pallier les inconvénients de l'art antérieur.

Plus précisément, l'invention a pour objectif de simplifier les moyens de transport de menu bétail.

Un autre objectif de l'invention est de proposer des conteneurs pour menu bétail qui soient plus simples de conception que ceux de l'art antérieur et qui permettent une réduction des coûts liés à leur exploitation dans les installations d'abattage les mettant en oeuvre.

L'invention a également pour objectif de permettre des gains de place sensibles dans les quais de déchargement de menu bétail ainsi que dans les installations qui intègrent ces quais de déchargement.

Ces objectifs ainsi que d'autres qui apparaîtront par la suite, sont atteints à l'aide d'un conteneur pour le transport de menu bétail, notamment de volailles, comprenant au moins quatre montants verticaux et une pluralité de plateaux horizontaux formant une structure étagée limitant une pluralité de compartiments répartis en au moins une colonne.

Selon l'invention, le conteneur comprend au moins une porte latérale montée coulissante verticalement et fermant lesdits compartiments.

On obtient ainsi un conteneur adapté au transport ainsi qu'au déchargement de menu bétail sans qu'il soit nécessaire d'avoir recours à une pluralité de bacs.

La conception du conteneur permet des gains de fabrication sensibles en l'absence des bacs plastiques mis en oeuvre dans l'art antérieur.

De plus, des moyens de convoyage et de lavage des bacs vides peuvent être supprimés de l'installation d'abattage. Seuls les moyens de convoyage et de lavage des conteneurs vides restent nécessaires.

Des économies sont ainsi réalisées tant au niveau des coûts d'exploitation qu'au niveau de l'encombrement des équipements dont sont pourvus les quais de déchargement et les installations intégrant ces quais.

Selon une solution avantageuse, chacun desdits compartiments est pourvu d'une porte individuelle frontale de chargement desdites volailles dans lesdits compartiments.

La possibilité de charger individuellement les compartiments est ainsi conservée.

Préférentiellement, lesdits compartiments sont répartis en deux colonnes.

Selon une solution avantageuse, lesdits plateaux horizontaux sont grillagés.

Le menu bétail, en particulier les volailles, peuvent grâce à cette structure de plateaux s'agripper au conteneur pendant la durée du transport.

Avantageusement, ladite ou lesdites portes coulissantes latérales sont grillagées.

On obtient ainsi des moyens de ventilation des compartiments pendant le transport du menu bétail.

Selon une solution avantageuse, les montants de ladite ou desdites portes latérales et lesdits montants verticaux dudit conteneur présentent chacun une section en V, l'une mâle, l'autre femelle, destinées à coopérer entre elles pour guider le coulissement de ladite ou desdites portes latérales. Dans ce cas, lesdits montants de ladite ou desdites portes latérales présentent préférentiellement une section en V mâle tandis que lesdits montants verticaux dudit conteneur présentent une section en V femelle.

Les montants des portes et ceux du conteneur ainsi profilés assurent un guidage du coulissement efficace.

Ainsi constitués, ces montants ne sont pas ou peu des phénomènes de coincement dus par exemple à des chocs mécaniques ou à un encrassement.

Préférentiellement, ledit conteneur est réalisé en au moins un des matériaux appartenant au groupe suivant :
- inox ;
- aluminium ;
- acier galvanisé.

L'invention concerne également un quai de déchargement de menu bétail, notamment de volailles, contenu dans des conteneurs tels que décrits précédemment, sur au moins un convoyeur de transfert vers une chaîne d'abattage, caractérisé en ce qu'il comprend des moyens d'actionnement automatique de ladite ou desdites portes latérales coulissantes desdits conteneurs et des moyens d'amenée du menu bétail contenu dans lesdits compartiments sur ledit convoyeur de transfert.

Les compartiments peuvent ainsi être ouverts en fonction de leur position par rapport au convoyeur de transfert, en regard de ce dernier d'une part, et en regard des moyens de poussée du menu bétail d'autre part.

Selon une solution avantageuse, lesdits moyens d'actionnement automatique desdites portes latérales incluent au moins un portique pourvu de moyens de préhension desdites portes latérales coulissantes.

Les conteneurs peuvent de cette façon défiler successivement sous le portique en vue de procéder à leur déchargement. D'autres modes de réalisation des moyens d'actionnement automatique sont bien sûr envisageables sans sortir du cadre de l'invention.

Selon une solution préférée, lesdits moyens d'actionnement automatique desdites portes latérales coulissantes incluent des moyens de déplacement relatif desdits moyens de préhension par rapport à ladite structure étagée du conteneur. Dans ce cas, lesdits moyens de déplacement relatif comprennent des moyens de déplacement vertical de ladite structure.

On pourra notamment recourir à une table élévatrice pour le déplacement du conteneur.

De cette façon, le portique maintient dans une position donnée les portes latérales tandis que la structure étagée est abaissée progressivement de façon à ouvrir les compartiments tandis que les moyens de poussée en évacuent le menu bétail.

Préférentiellement, lesdits moyens de déplacement vertical de ladite structure incluent au moins un vérin.

Bien entendu, d'autres moyens d'entraînement sont envisageables dans d'autres modes de réalisation, par exemple à l'aide d'une motorisation adaptée.

Selon un premier mode de réalisation, lesdits moyens d'amenée desdites volailles incluent un poussoir transversal comprenant un bord inférieur recourbé.

On peut de cette façon imprimer une poussée progressive aux volailles, les amenant à sortir des compartiments délicatement.

Dans ce cas, ledit bord inférieur du poussoir transversal est préférentiellement équipé d'un coussin de protection.

On évite ainsi de pousser les volailles avec un organe présentant un bord saillant. Au contraire, le bord du poussoir est ainsi conçu pour éviter toute blessure susceptible d'être occasionnée aux volailles.

Selon un deuxième mode de réalisation, lesdits moyens d'amenée comprennent au moins un tapis intermédiaire de transfert dudit menu bétail à partir dudit conteneur vers ledit convoyeur, ledit tapis intermédiaire étant mobile entre au moins deux positions :
- une position d'attente dans laquelle il s'étend essentiellement entre ledit conteneur et ledit convoyeur ;
- une position de transfert dans laquelle il s'étend dudit convoyeur jusqu'à l'intérieur dudit conteneur.

Dans ce cas, le quai comprend préférentiellement des moyens permettant de translater au moins un rouleau d'extrémité dudit tapis intermédiaire de l'extérieur dudit conteneur vers l'intérieur dudit conteneur, et inversement.

On évite de cette façon de déplacer entièrement le tapis intermédiaire, voire de déplacer ensemble le tapis intermédiaire et le convoyeur de transfert (ou une partie seulement de celui-ci).

Selon une première approche, ledit tapis intermédiaire comprend une bande transporteuse extensible.

Selon une autre approche, ledit tapis intermédiaire comprend au moins un rouleau de renvoi de la bande dudit tapis intermédiaire, ledit rouleau de renvoi étant mobile entre au moins deux positions :
- une position d'attente dans laquelle il permet de réduire la longueur de la partie de ladite bande dudit tapis intermédiaire sur laquelle ledit menu bétail est susceptible de prendre position ;
- une position de transfert dans laquelle il permet d'augmenter la longueur de la partie de ladite bande dudit tapis intermédiaire sur laquelle ledit menu bétail est susceptible de prendre position.

D'autres caractéristiques et avantages de l'invention apparaîtront plus clairement à la lecture de la description suivante de deux modes de réalisation préférentiels de l'invention, donnés à titre d'exemple illustratifs et non limitatifs, et des dessins parmi lesquels :
- la figure 1 procure une vue en perspective d'un conteneur selon l'invention en situation de déchargement ;
- la figure 2 est une vue de détail illustrant la section des montants des portes latérales et celle des montants du conteneur ;
- les figures 3 et 4 sont des vues schématiques d'une partie du quai de déchargement selon l'invention, incluant un tapis intermédiaire ;
- la figure 5 illustre de façon schématique un poussoir de volailles équipant un quai de déchargement selon l'invention ;
- les figures 6 à 9 illustrent de façon schématique différentes étapes du déchargement de conteneurs selon l'invention ;
- la figure 10 illustre de façon schématique l'implantation d'une installation intégrant un quai de déchargement selon l'invention.

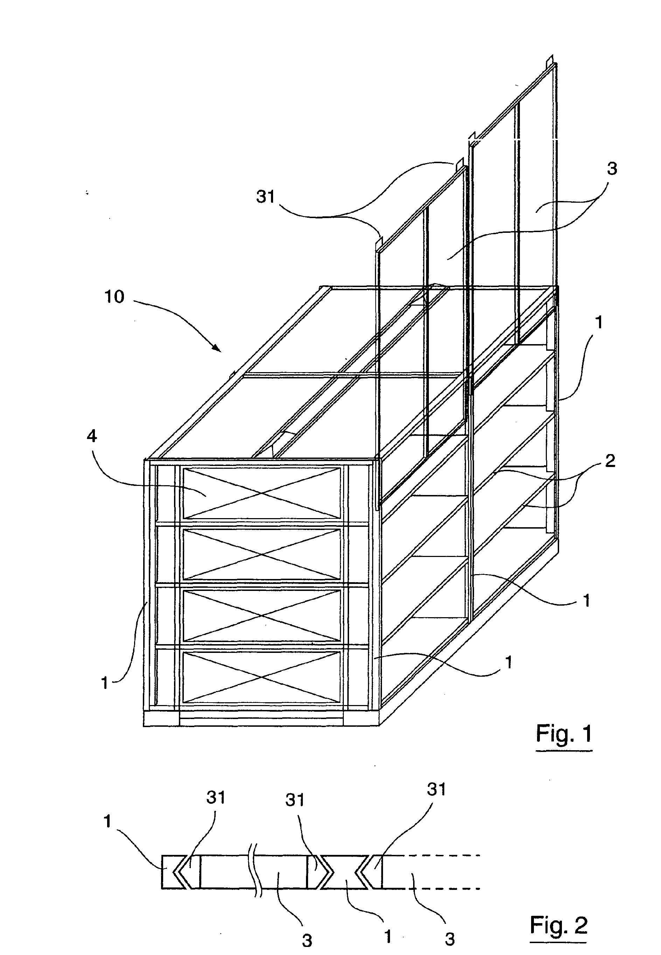

En référence à la figure 1, un conteneur 10 comprend des montants verticaux 1 et cinq plateaux 2 horizontaux grillagés formant une structure étagée limitant dix compartiments répartis en deux colonnes.

Bien entendu, le nombre de montants et de plateaux horizontaux pourra varier dans d'autres modes de réalisation en fonction du nombre de compartiments souhaité.

Selon le présent mode de réalisation de l'invention, le conteneur 10 comprend également deux portes latérales 3 montées coulissantes sur les montants verticaux 1 du conteneur.

Telles qu'illustrées, les portes latérales sont grillagées. Elles pourront toutefois avoir toute autre structure permettant la ventilation des compartiments dans d'autres modes de réalisation.

On note que ces portes 3 présentent en leur partie supérieure des poignées 31.

Chaque compartiment est en outre pourvu d'une porte individuelle 4 destinée à permettre le chargement des volailles (ou autre menu bétail) dans les compartiments.

La forme des montants 31 des portes 3 et celle, complémentaire, des montants verticaux 1 du conteneur sont représentées à la figure 2.

Comme cela apparaît clairement sur cette figure, les montants 31 présentent une section en V mâle, tandis que les montants 1 du conteneur présentent une section en V femelle, accueillant et guidant le coulissement des montants 31 des portes 3.

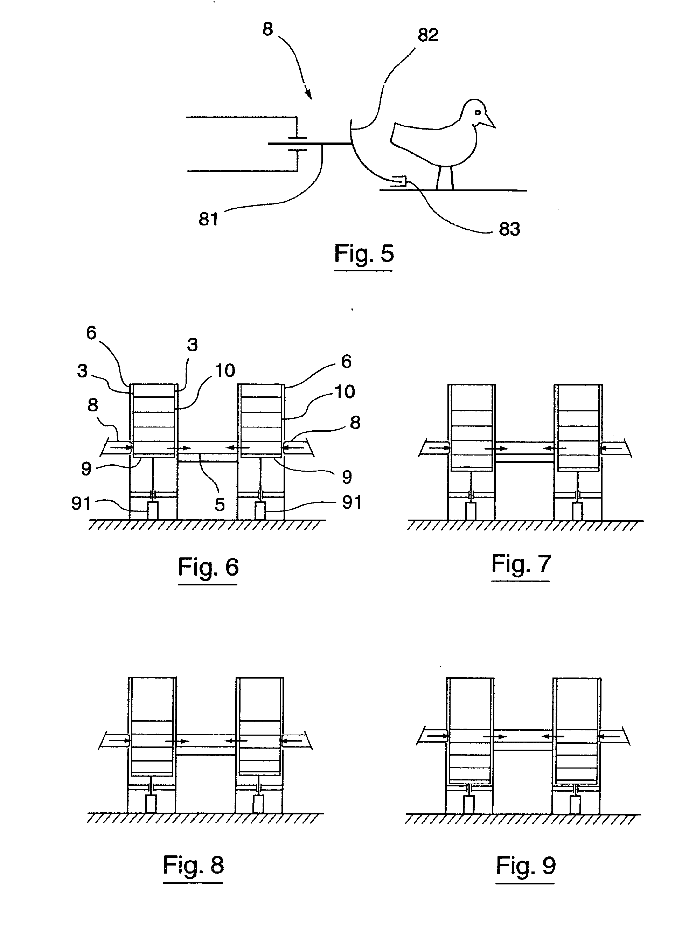

En référence aux figures 6 à 9, un quai de déchargement selon l'invention est prévu pour recevoir, selon le présent mode de réalisation, deux conteneurs 10 se faisant face de part et d'autre d'un convoyeur de transfert 5 des volailles vers une chaîne d'abattage.

Chaque conteneur est réceptionné à l'emplacement des portiques 6 sur une table élévatrice 9 permettant d'amener successivement chaque compartiment du conteneur à la hauteur du convoyeur de transfert 5.

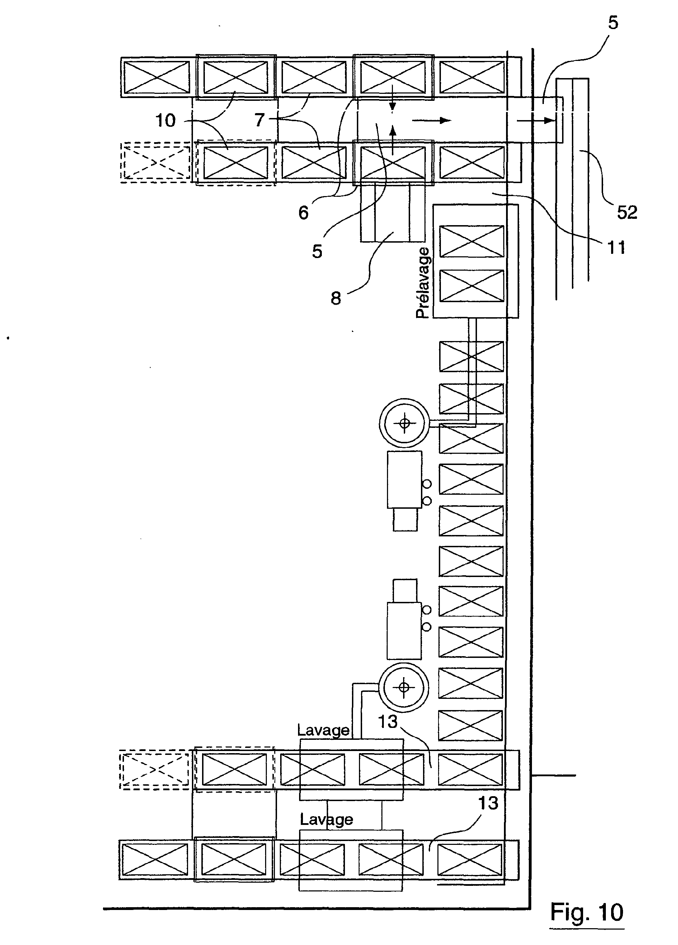

Le fonctionnement du système est le suivant : les conteneurs 10 en provenance des fermes d'élevage sont déposés successivement sur les convoyeurs de conteneurs 7 (tels que représentés sur la figure 10). Ce convoyeur 7 amène successivement les conteneurs 10 sous les portiques 6.

A ce stade, les portiques 6, formant des moyens d'actionnement automatique des portes latérales 3 des conteneurs 10, rentrent en prise avec les portes latérales 3 à l'aide des poignées 31.

Tandis que les portes latérales 3 sont maintenues dans une position déterminée à l'aide des portiques 6 agissant sur les poignées 31, la table élévatrice 9, sous l'action des vérins 91, amène la première rangée de compartiments des conteneurs 10 au niveau du convoyeur de transfert 5 en procédant au déplacement de la structure étagée des conteneurs 10.

Les portes latérales étant maintenues en position haute, chaque compartiment au niveau du convoyeur de transfert 5 est ouvert en regard du convoyeur de transfert 5 d'une part, de moyens de poussée 8 d'autre part.

Les tables élévatrices 9 constituent ainsi des moyens de déplacement relatif des moyens de préhension par rapport à la structure étagée des conteneurs 10.

Pour chaque conteneur, les volailles occupant la première position dans les deux rangées d'un même plan horizontal sont amenées sur le convoyeur de transfert 5 par les moyens de poussée 8 dont la structure particulière est expliquée par la suite en relation avec la figure 5.

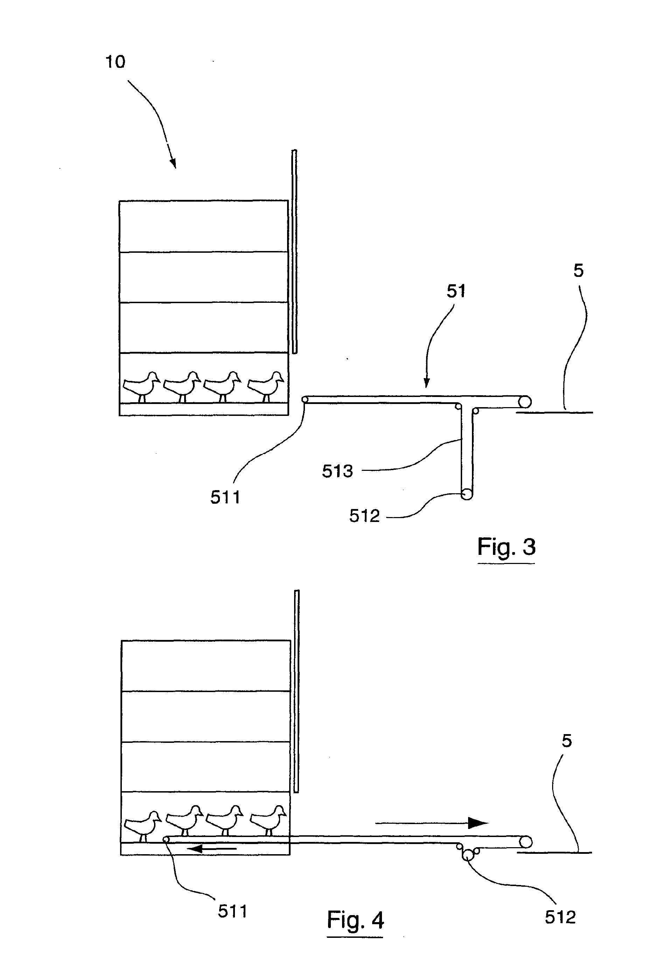

Une fois les volailles évacuées des compartiments d'un même plan horizontal, les vérins 91 actionnent les tables élévatrices 9 de façon à descendre les conteneurs d'un niveau, c'est-à-dire la rangée suivante de compartiments d'un même plan horizontal comme indiqué par la figure 3.

On note que le maintien des portes latérales 3 en position haute entraîne l'ouverture progressive des compartiments au fur et à mesure de la descente de la structure étagée des conteneurs 10.

L'opération de descente de la structure étagée et de poussée des volailles hors des compartiments est ensuite réitérée (figures 8 et 9) jusqu'à ce que chaque niveau de compartiments ait été placé en regard du convoyeur de transfert 5, toutes les volailles ayant alors été amenées sur le convoyeur de transfert 5.

La figure 5 procure une représentation schématique d'un poussoir 8 utilisé pour provoquer la sortie des volailles des compartiments des conteneurs et les amener sur le convoyeur de transfert 5.

Selon le présent mode de réalisation, le poussoir 8, actionné par un vérin 81, comprend une plaque 82 s'étendant transversalement par rapport aux compartiments des conteneurs, c'est-à-dire sensiblement parallèlement au convoyeur de transfert 5.

Cette plaque transversale 82, présente un bord inférieur recourbé en direction des volailles comme cela apparaît clairement sur la figure 5.

De plus, le bord inférieur recourbé de la plaque transversale 82 est muni d'un coussin de protection 83.

Selon un autre mode de réalisation envisageable, les moyens d'amenée du menu bétail à partir des conteneurs vers le convoyeur 5 peuvent comprendre un tapis de transfert intermédiaire.

Ce mode de réalisation est illustré par les figures 3 et 4.

Comme cela apparaît clairement sur ces figures 3 et 4, le tapis intermédiaire 51 est mobile entre deux positions :
- une position d'attente (figure 3) dans laquelle il s'étend essentiellement entre le conteneur 10 et le convoyeur 5 ;
- une position de transfert (figure 4) dans laquelle il s'étend du convoyeur 5 jusqu'à l'intérieur du conteneur 10, de façon à ce que le menu bétail prenne position sur le tapis 51 et soit dirigé vers le convoyeur 5.

Pour passer d'une position à l'autre, le rouleau d'extrémité 511 est translaté horizontalement entre la position illustrée par la figure 3 et la position illustrée par la figure 4.

Selon le présent mode de réalisation, le tapis intermédiaire 51 comprend également un rouleau de renvoi 512 de la bande transporteuse 513 du tapis 51.

Ce rouleau de renvoi 512 est mobile entre la position qu'il occupe sur la figure 3 dans laquelle il réduit la partie de la bande 513 s'étendant horizontalement (permettant au tapis intermédiaire 51 de s'inscrire entre le conteneur 10 et le convoyeur 5) et la position qu'il occupe sur la figure 4 dans laquelle il permet à la bande 513 de s'étendre horizontalement jusqu'à l'intérieur du conteneur 10.

Bien entendu, d'autres modes de réalisation sont envisageables pour permettre la mobilité du rouleau 511, notamment en déviant la bande transporteuse dans un plan horizontal.

La bande transporteuse peut aussi, selon un autre mode de réalisation envisageable être extensible, en particulier en l'absence d'une déviation de la bande par l'intermédiaire du rouleau de renvoi 512.

L'installation intégrant un quai de déchargement tel que celui qui vient d'être décrit va maintenant être expliquée plus en détail à l'aide de la figure 10.

Comme cela a déjà été indiqué, les conteneurs 10 sont amenés sur les convoyeurs 7 et acheminés par ceux-ci en direction des portiques 6 où ils sont vidés de leur contenu par les moyens de poussée 8 (ou par un tapis intermédiaire 51 selon un autre mode de réalisation envisageable).

Les volailles placées sur le convoyeur de transfert 5 sont elles acheminées par un second convoyeur 52 qui les dirigent vers une zone de traitement en vue de leur abattage.

Les conteneurs 10 vidés de leur contenu sont amenés sur un convoyeur 11 qui les acheminent vers une station de prélavage 12.

Selon le présent mode de réalisation, les conteneurs 10 sont ensuite amenés sur des convoyeurs qui les acheminent vers une station de lavage.

On notera que les opération de prélavage et de lavage sont facilitées par la structure grillagée des plateaux et des portes latérales des conteneurs.

D'autres modes de réalisation utilisant le principe des conteneurs, comprenant des portes latérales coulissantes et celui du quai de déchargement qui viennent d'être décrits sont bien entendu envisageables sans sortir du cadre de l'invention.

## Revendications

1. Conteneur pour le transport de menu bétail, notamment de volailles, comprenant au moins quatre montants verticaux (1) et une pluralité de plateaux horizontaux (2) formant une structure étagée limitant une pluralité de compartiments répartis en au moins une colonne, **caractérisé en ce qu'**il comprend au moins une porte latérale (3) montée coulissante verticalement fermant de part et d'autre lesdits compartiments.

2. Conteneur selon la revendication 1, **caractérisé en ce que** chacun desdits compartiments est pourvu d'une porte individuelle frontale (4) de chargement desdites volailles dans lesdits compartiments.

3. Conteneur selon l'une quelconque des revendications 1 ou 2, **caractérisé en ce que** lesdits compartiments sont répartis en deux colonnes.

4. Conteneur selon l'une quelconque des revendications 1 à 3, **caractérisé en ce que** lesdits plateaux horizontaux (2) sont grillagés.

5. Conteneur selon l'une quelconque des revendications 1 à 4, **caractérisé en ce que** ladite ou lesdites portes coulissantes latérales (3) sont grillagées.

6. Conteneur selon l'une quelconque des revendications 1 à 5, **caractérisé en ce que** les montants de ladite ou desdites portes latérales (3) et lesdits montants verticaux (1) dudit conteneur présentent chacun une section en V, l'une mâle, l'autre femelle, destinées à coopérer entre elles pour guider le coulissement de ladite ou desdites portes latérales.

7. Conteneur selon la revendication 6, **caractérisé en ce que** lesdits montants de ladite ou desdites portes latérales (3) présentent une section en V mâle tandis que lesdits montants verticaux (1) dudit conteneur présentent une section en V femelle.

8. Conteneur selon l'une quelconque des revendications 1 à 7, **caractérisé en ce qu'**il est réalisé en au moins un des matériaux appartenant au groupe suivant :
- inox ;
- aluminium ;
- acier galvanisé.

9. Quai de déchargement de menu bétail, notamment de volailles, contenu dans des conteneurs selon l'une quelconque des revendications 1 à 8 sur au moins un convoyeur de transfert (5) vers une chaîne d'abattage, **caractérisé en ce qu'**il comprend des moyens d'actionnement automatique (6) de ladite ou desdites portes latérales coulissantes desdits conteneurs et des moyens d'amenée du menu bétail contenu dans lesdits compartiments sur ledit convoyeur de transfert (5).

10. Quai selon la revendication 9, **caractérisé en ce que** lesdits moyens d'actionnement automatique (6) desdites portes latérales (3) incluent au moins un portique pourvu de moyens de préhension (61) desdites portes latérales coulissantes (3).

11. Quai selon la revendication 10, **caractérisé en ce que** lesdits moyens d'actionnement automatique (6) desdites portes latérales (3) coulissantes incluent des moyens de déplacement relatif (9) desdits moyens de préhension (61) par rapport à ladite structure étagée du conteneur.

12. Quai selon la revendication 11, **caractérisé en ce que** lesdits moyens de déplacement relatif (9) comprennent des moyens de déplacement vertical (91) de ladite structure.

13. Quai selon la revendication 12, **caractérisé en ce que** lesdits moyens de déplacement vertical (91) de ladite structure incluent au moins un vérin.

14. Quai selon l'une quelconque des revendications 9 à 13, **caractérisé en ce que** lesdits moyens d'amenée desdites volailles incluent un poussoir transversal (82) comprenant un bord inférieur recourbé.

15. Quai selon la revendication 14, **caractérisé en ce que** ledit bord inférieur du poussoir transversal est équipé d'un coussin de protection (83).

16. Quai selon l'une quelconque des revendications 9 à 13, **caractérisé en ce que** lesdits moyens d'amenée comprennent au moins un tapis intermédiaire de transfert dudit menu bétail à partir dudit conteneur vers ledit convoyeur, ledit tapis intermédiaire étant mobile entre au moins deux positions :
- une position d'attente dans laquelle il s'étend essentiellement entre ledit conteneur et ledit convoyeur ;
- une position de transfert dans laquelle il s'étend dudit convoyeur jusqu'à l'intérieur dudit conteneur.

17. Quai selon la revendication 16, **caractérisé en ce qu'**il comprend des moyens permettant de translater au moins un rouleau d'extrémité dudit tapis intermédiaire de l'extérieur dudit conteneur vers l'intérieur dudit conteneur, et inversement.

18. Quai selon les revendications 16 et 17, **caractérisé en ce que** ledit tapis intermédiaire comprend une bande transporteuse extensible.

19. Quai selon les revendications 16 et 17, **caractérisé en ce que** ledit tapis intermédiaire comprend au moins un rouleau de renvoi de la bande dudit tapis intermédiaire, ledit rouleau de renvoi étant mobile entre au moins deux positions :
- une position d'attente dans laquelle il permet de réduire la longueur de la partie de ladite bande dudit tapis intermédiaire sur laquelle ledit menu bétail est susceptible de prendre position ;
- une position de transfert dans laquelle il permet d'augmenter la longueur de la partie de ladite bande dudit tapis intermédiaire sur laquelle ledit menu bétail est susceptible de prendre position.
